# EUROPEAN PATENT APPLICATION

(11) **EP 0 872 198 A2**
(43) Date of publication of application: **21.10.1998**
(21) Application number: 98200723.9
(22) Date of filing: 07.03.1998
(51) Int. Cl.: A47C 27/14, A47C 27/06

(54) **Foam spring**

(30) Priority: 27.03.1997 BE 9700283
(71) Applicant: IMHOLD, naamloze vennootschap, B-9100 Sint-Niklaas (BE)
(72) Inventor: Poppe, Willy, 9100 Sint-Niklaas (BE)
(74) Representative: Donné, Eddy

(57) **Abstract**

Foam spring which comprises a tubular body (1) of foam which is provided in its wall with cavities (4) which are directed inward from the outside, characterised in that the body (1) is widening-narrowing from one extremity to the other.

## Description

The invention relates to a foam spring, more specifically a foam spring which can be used as a replacement of steel springs as a construction element for seats, mattresses, cushions and the like.

The foam can be synthetic foam, such as polyurethane foam, as well as natural foam, such as natural latex.

Such foam springs offer excellent springy properties and optimal comfort and can be easily processed.

Such foam springs are known consisting of a tubular body of foam which is provided with cavities which extend inward from the outside. They are manufactured by providing a flat oblong foam mat with incisions and connecting the extremities of this foam mat to each other.

Such a foam spring is known from the Belgian patent No. 1.007.171.

By searching for an optimal proportion between the material thickness and the diameter of the foam spring, it has been tried to realise a well-balanced spring, which resulted in a tubular foam spring with internal and external diameters which are constant along the entire length.

When loading such foam springs the pressure is therefore perfectly divided between the entire upper surface or pressure surface and the underlying cavities.

Because, when forming the foam spring starting from a flat strip, the material at the inside is compressed more and therefore has a larger density than at the outside, the resistance of the foam spring increases inward from the outside.

Such foam springs are suitable as a spring with a relatively large resistance such as for a mattress, where this resistance can even be more increased by applying a steel spring in the cavity of the tubular foam spring.

A disadvantage of these springs, however, resides in the fact that they are not suitable as very soft springs such as for instance used in pillows.

Indeed, there do not exist foams that are soft enough to make a qualitatively good soft springy foam spring. In case of foams, as for instance polyurethane foam, the softness is mostly inversely proportional to the specific gravity. Foams with a low specific gravity, which are therefore very soft, mostly do not have the necessary force and mass to unfold completely to a smooth spring, because of the lack of required internal tensions. Such foams result in foam springs which are very easily fatigued and lose their initial height and shape after a short time.

The present invention therefore aims at a foam spring which totally excludes the above-mentioned disadvantage of the known foam springs, in other words has a maximal softness and elasticity which is also maintained throughout time.

This aim is realised according to the invention by a foam spring which comprises a tubular body of foam which is in its wall provided with cavities which are directed inward from the outside, whereby the body is widening-narrowing from one extremity to the other.

A foam spring such as this is soft even though the body is made of a foam with relatively high density.

An additional advantage of these foam springs with respect to the known cylindrical foam springs is that they will not bend so easily under non-axial forces and can therefore be higher.

Preferably, the body is round and therefore barrel-shaped.

The shape of the body can be a consequence of the fact that the body is spread open between its extremities, especially by a core which can possibly made of foam.

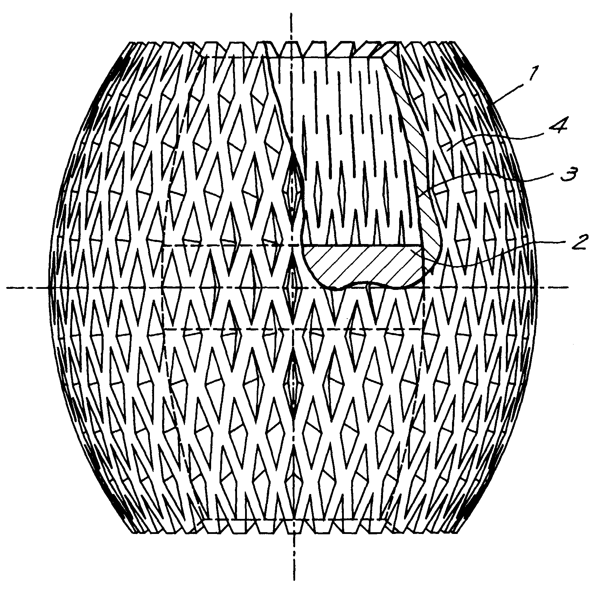

In order to better show the characteristics of the invention, a preferred embodiment is described hereafter, as an example without any limitative character whatsoever, reference being made to the accompanying drawing, whereby the only figure represents a front view of a foam spring according to the invention with partial excision.

The foam spring according to the invention mainly consists of a tubular body 1 which is made of foam, for instance polyurethane foam of foam of natural or synthetic latex, and which is widening-narrowing from one extremity to the other and of a core 2 which is preferably also made of such a foam.

The tubular body 1 is provided with a central opening 3 which extends axially between the two extremities.

In the wall of the tubular body cavities 4 are provided which are preferably arranged in alternating symmetry and narrowing from the outer wall of the tubular body 1 towards the inner wall, for instance to practically zero at the inside. These cavities have for instance an almost lozenge-shaped section.

The core 2 does not fill the entire opening 3 but has the shape of a disc which only extends over a limited height of the body 1 between the extremities. The thickness of this disc is for instance approximately two centimetres while the length of the body 1 can for instance amount to eight to 15 centimetres.

However, perpendicular to the longitudinal axis of the body 1 the core 2 is larger than the central opening 3 of this body 1 in rest position, this is before the core 2 has been inserted.

If the body 1 is round, as represented in the figure, the outer diameter of the body 1 at the extremities is therefore smaller than between these extremities. This body 1 is then barrel-shaped.

In this case the core 2 is cylindrical at rest, with a diameter which is larger, for instance approximately two centimetres larger, than the inner diameter of the body 1 before the core 2 has been inserted.

The above-described foam spring can for instance be manufactured as follows.

The body 1 is manufactured starting from a flat piece or block of foam which is provided over its entire surface with short incisions extending through the thickness of the piece or block and are preferably arranged according to an alternating pattern.

This piece or block is subsequently folded in such a way that two opposite extremities are brought together so that a cylinder is formed, after which these extremities are attached together, for instance glued together.

Finally, the core 2 is pushed into this cylindrical body 1.

This core 2 opens the body 1 wide in the middle. The outside of the body 1 bulges between its extremities and obtains as it were the shape of a barrel.

The diameter at the extremities of the body 1 will decrease somewhat.

In the above-described foam spring also the inside of the body 1 and therefore the opening 3 is widening-narrowing between the extremities, due to the presence of the core 2. At the place of the core 2 the wall of the body 1 has been somewhat compressed and has therefore become thinner.

Because the body 1 is opened wide or distended by the core 2, the openings or cavities 4 will be wider open there, which results, together with the thinner wall thickness of the body 1, in a lower counter-pressure when compressing the foam spring.

The necessary compression force to compress the foam spring is thus reduced to a minimum, while the foam spring does remain very stable.

A foam spring which is widening-narrowing between the extremities, also offers the advantage that it will bend less easily than if the cylindrical body 1 would have been used as a foam spring without the core 2 and would therefore be higher.

The extremities of the foam spring are relatively flat, so that the attachment of the extremities to for instance a basis or cover or the processing of these extremities can take place with ease.

The present invention is in no way limited to the embodiment described as an example and represented in the figures, but such foam spring can be realised in different forms without leaving the scope of the invention.

## Claims

1. Foam spring which comprises a tubular body (1) of foam which is provided in its wall with cavities (4) which are directed inward from the outside, characterised in that the body (1) is widening-narrowing from one extremity to the other.

2. Foam spring according to claim 1, characterised in that the body (1) is round and therefore barrel-shaped.

3. Foam spring according to any one of the preceding claims, characterised in that the shape of the body (1) is a consequence of the fact that the body (1) is opened wide between its extremities.

4. Foam spring according to claim 3, characterised in that the body (1) is opened wide between its extremities by means of a core (2).

5. Foam spring according to claim 4, characterised in that the core (2) is made of foam.

6. Foam spring according to claims 2 and 5, characterised in that the core (2), before it has been inserted, is a round disc, the diameter of which is larger than the inner diameter of the body (1) before the core (2) has been inserted in it.

7. Foam spring according to any one of claims 4 to 6, characterised in that the cavities (4) in the tubular body (1) are smaller near the extremities than halfway between them.

8. Foam spring according to any one of the preceding claims, characterised in that the tubular body (1) is manufactured by providing a flat piece or block of foam with incisions, preferably according to an alternating pattern, and by bringing two opposite extremities against each other and connecting them to one another.
